Europäisches Patentamt

**European Patent Office**

Office européen des brevets

(19)

(11) Publication number: **0 020 491**
**B1**

(12)    **EUROPEAN PATENT SPECIFICATION**

(45) Date of publication of patent specification: **22.12.82**

(21) Application number: **79901329.7**

(22) Date of filing: **24.09.79**

(86) International application number:
**PCT/US79/00761**

(87) International publication number:
**WO 80/00752 17.04.80 Gazette 80/8**

(51) Int. Cl.³: **G 03 B 23/02,**
**G 03 C 11/00**

(54)  **DUAL WEB SOUND MOVIE CASSETTE WITH EMULSION STRIPPING WEB.**

(30) Priority: **02.10.78 US 947769**

(43) Date of publication of application:
**07.01.81 Bulletin 81/1**

(45) Publication of the grant of the patent:
**22.12.82 Bulletin 82/51**

(84) Designated Contracting States:
**FR**

(56) References cited:
**US - A - 1 957 525**
**US - A - 1 963 179**
**US - A - 2 962 927**
**US - A - 3 240 329**
**US - A - 3 600 071**
**US - A - 3 604 790**
**US - A - 3 615 127**
**US - A - 3 674 345**
**US - A - 3 856 387**
**US - A - 3 895 862**

(73) Proprietor: **POLAROID CORPORATION**
**549 Technology Square**
**Cambridge, Massachusetts 02139 (US)**

(72) Inventor: **STELLA, Joseph A.**
**8 Beeman Road**
**Peabody, MA 01960 (US)**

(74) Representative: **Abbott, Leonard Charles et al,**
**GILL JENNINGS & EVERY 53/64 Chancery Lane**
**London WC2A 1HN (GB)**

Courier Press, Leamington Spa, England.

Dual web sound movie cassette with emulsion stripping web

## Background of the Invention

This invention relates to a photographic film cassette for sound motion picture systems according to the prior art part of claim 1.

Motion picture systems including a multipurpose film cassette in which a film strip is contained without removal during exposure, processing and projection operations are described in prior U.S. Patent Nos. 3,615,127, 3,600,071, and 3,895,862. In accordance with the disclosures of these patents, the film cassette is first placed in a camera for exposure of the film strip therein in conventional fashion. After exposure, the cassette is loaded into a viewing device which first subjects the cassette to a sequence of operations during which the film strip is processed to develop a series of image transparency frames. The same viewing device then projects the developed image frames onto a screen for motion picture viewing.

The cassette system represented by the disclosure of these prior patents may be provided with an audio capability as disclosed in prior U.S. Patent Nos. 3,604,790 and 3,856,387. In the audio/visual systems disclosed in these latter patents, a magnetic sound recording track is provided along one or both of the longitudinal borders of the cassette contained film strip and the cassette includes a provision for moving a loop of the film strip in operative relationship with a transducing head forming part of an audio system. While the arrangements disclosed in these patents provide generally acceptable audio reproduction, the narrow width of the audio tracks necessitated by their being carried directly on the film strip limits the level of sound quality which may be achieved or, conversely, increases the degree of sophistication or cost required of the audio system to achieve high fidelity.

The sound track dimensional limitations of the prior systems may be solved by providing in the cassette a separate audio tape in addition to the usual photographic film strip. Both the tape and the strip may extend between, and may be interwound in nesting convolutions on, cassette contained supply and takeup spools. In this way, both the tape and the film strip may be simultaneously wound or unwound from the respective spools but the path through which the sound tape passes between the spools is different from that of the film strip. In particular, the film strip travels through a path including an exposure/projection station whereas the sound tape travels in a path including an audio transducing head and drive capstan.

The principal difficulty encountered with such dual web systems in the multipurpose cassettes having a provision for processing the motion picture film strip is the tendency for the sound tape to adhere to the emulsion or, at least, to processing fluid on the film strip emulsion during the period just following the deposition of processing fluid on the film strip. This problem may be overcome by providing a mechanical stripping device for separating the sound tape from the film strip. Relative movement of the mechanical stripping device and the film strip, however, is likely to produce an undesirable wearing and possibly damage to one or both webs, particularly after repeated projection cycles.

The film strip currently used in the system is an additive color film structure including, in the order of light transmission during exposure, a transparent polyester carrier base, an additive color screen, a processing fluid barrier layer, a positive image receiving layer or interface, a silver halide emulsion or negative image receiving layer, and an inner layer of antihalation dyes and image stabilizer. When processed by coating the inner layer with a thin uniform layer of processing fluid or liquid, the chemicals contained in the processing fluid permeate the inner layer to the emulsion to develop exposed silver halide grains and render them essentially transparent. Unexposed silver halide grains migrate by diffusion to the positive image-receiving interface at which they are transformed into an opaque silver image in varying degrees of density. During and after development of the images, the antihalation dyes in the inner layer are bleached to become colorless. The negative image in the emulsion is sufficiently low in covering power relative to the positive image that the film strip may be viewed by projection of light in a direction proceeding through the inner layer, the processed emulsion layer and the remaining positive image carrying portions of the film strip and the color screen.

The presence of the spent emulsion layers on the film strip after processing and during projection can be characterized as a compromise between advantages to be gained by removal of these layers and difficulties heretofore experienced in achieving their removal while retaining the desirable characteristics of the present system, particularly those characteristics attributed to the retention at all times of the film strip in the same cassette in which it was initially packaged. A principal advantage to be gained by removing the spent inner emulsion layers is greater transmissibility of the processed film during projection. The problems resulting from retention of the spent inner and emulsion layers on the processed film strip have been recognized previously and dealt with by stripping these layers from the film after processing. See, for example, U.S. Patent Nos. 3,455,633, 3,709,588, and 3,711,192.

## Summary of the Invention

In accordance with the present invention, the problems associated with dual web multipurpose film cassettes and with stripping or removing of negative emulsion layers are alleviated by providing a third, separating and stripping web as defined by the characterizing part of claim 1. The separating web is interposed between the tape and the film emulsion surface, and passes between the spools under tension adequate to assure ready separation of the separating web and the negative emulsion from the film strip in a smooth and positive manner without interfering in any way with the operation of the cassette in any of its several modes of operation. The separating web is interposed between the emulsion side of the film strip and the sound tape so that when the three webs are wound in nesting or interleaved convolutions on either one or both of the supply and takeup spools, one side of the sound tape is in contact with the dry carrier side of the film strip whereas the other side of the sound tape is in contact with the separating web.

Among the objects of the present invention, are therefore, the provision of an improved multipurpose film cassette capable of use with audio/visual apparatus; the provision of such a film cassette in which a sound tape may be wound with a film strip immediately after the deposition of a processing liquid thereon without adherence of the sound strip to the film strip; the provision of an improved web stripping arrangement for removing negative emulsion in dual web photographic film cassettes; and the provision of such an improved arrangement which is low in cost, easy to adapt to existing cassette designs, and trouble-free in operation.

Other objects and further scope of applicability of the present invention will become apparent from the detailed description to follow taken in conjunction with the accompanying drawings in which like parts are designated by like reference characters.

Brief Description of the Drawings

Figure 1 is a cutaway side elevation illustrating the interior components of a multipurpose film cassette incorporating a separating and stripping web in accordance with the present invention;

Figure 2 is a fragmentary side elevation similar to Figure 1 but with the components in a different condition of operation;

Figure 3 is an enlarged cross-section on line 3—3 of Figure 1;

Figure 4 is a greatly enlarged fragmentary cross-section of the film strip and separating web illustrated in Figure 3;

Figure 5 is a cross-section of the separating and stripping web of Figure 1, but showing film components carried by the stripping web after film processing and stripping; and

Figure 6 is a cross-section of processed film after processing and stripping.

Detailed Description of the Preferred Embodiment

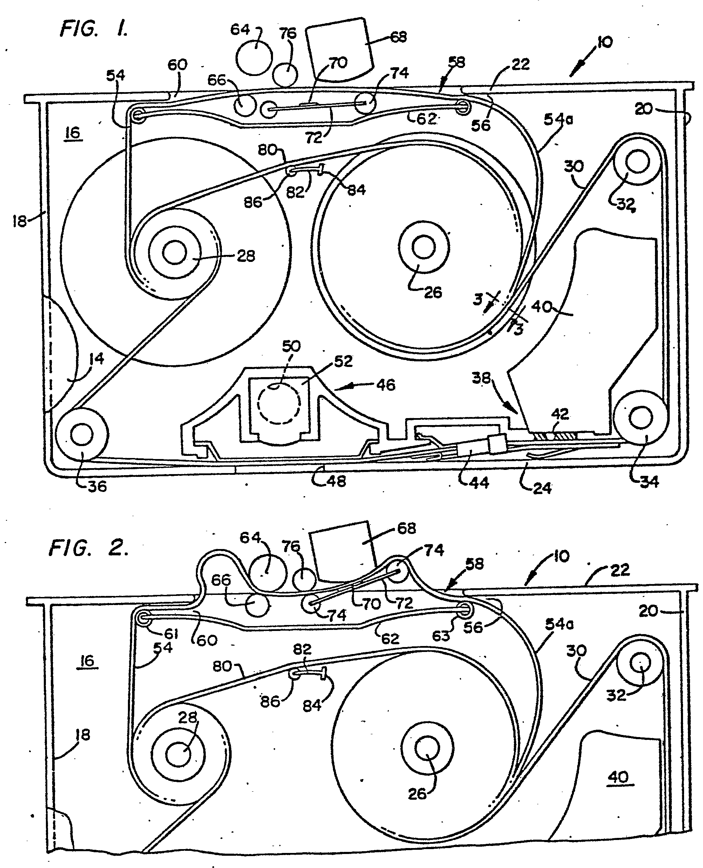

In Figure 1 of the drawings, an embodiment of the present invention is shown in a multipurpose film cassette of a type similar to those described in the aforementioned patents. As such, the cassette includes an exterior housing 10 defined by planar side walls 14 and 16 joined by end walls 18 and 20 and by elongated top and bottom walls 22 and 24 respectively. Rotatably supported on parallel axes between the side walls 14 and 16 are supply and takeup spools 26 and 28, respectively, to which opposite ends of a photographic film strip 30 are attached. The path of the film strip 30 between the supply and takeup spools extends from the supply spool 26 about a bobulator roller 32, an idler roller 34, through a flight along the interior of the bottom wall 24, about a snubbing roller 36 and finally to the takeup spool 28.

In its flight between the idler roller 34 and the snubbing roller 36, the film strip 30 passes through a photographic station including a processing station 38 which includes a reservoir 40 for containing a supply of processing fluid such as an aqueous processing liquid adapted to be applied to the emulsion side of the film strip 30 through a nozzle 42. Also shown in Figure 1 is a valve assembly 44 movable by the film strip 30 during the terminal portions of a processing cycle to a position closing the nozzle 42.

After passing the processing station 38 during travel through the photographic station in a direction proceeding from the supply spool 26 to the takeup spool 28, the film strip 30 passes an exposure/projection station 46, which includes an opening 48 in the bottom wall 24 through which light may pass both during exposure of the film strip in a motion picture camera (not shown) and during projection in a viewing device (not shown). In this latter respect, the station 46 includes an opening 50 through which light from a projector is passed to a reflecting prism 52 through the film strip and the opening 48.

Inasmuch as the operation of the cassette during exposure, processing and projection of the film strip 30 is fully described in one or more of the aforementioned patents, these operations will be only cursorily summarized herein. In particular, when the cassette is loaded in an appropriate camera, the film strip travels through its path from the supply spool 26 to the takeup spool 28 for exposure of successive image frames at the station 46. When the film strip 30 is so exposed, it will be wound on the supply spool 28. The cassette is then removed from the camera and placed in the viewing device of the system which programs a processing cycle during which the film strip 30 is rewound from the takeup spool 28 to the supply spool 26. During the initial portion of such rewinding, the processing station 38 is activated and the emulsion side of the film strip will be coated with a layer of processing fluid as the strip is rewound on the supply spool 26. Thereafter, the direction of film strip travel is reversed for projection of the developed images thereon.

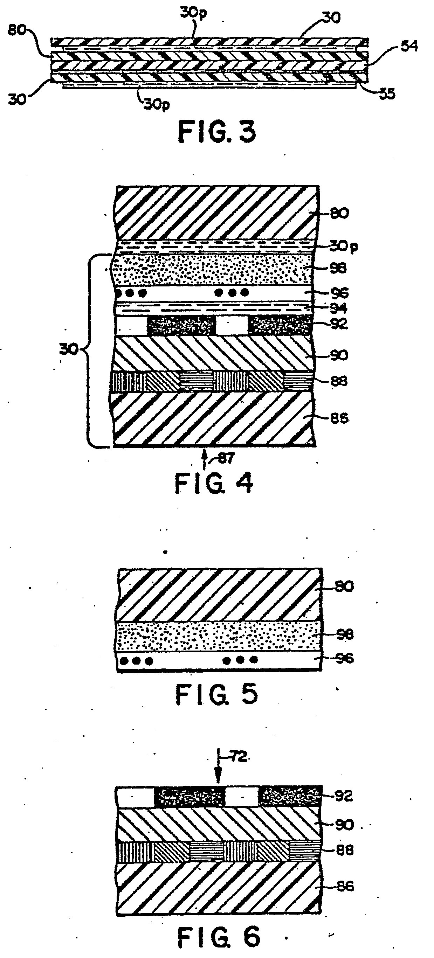

To provide for an audio capability, the illustrated multipurpose cassette is provided with a separate audio tape 54 having an oxide coating 55 (shown in Figure 3). The tape 54 is a flexible web of the same width as the film strip 30 and is interwound with the film strip 30, in the disclosed embodiment, on both the supply and takeup spools 26 and 28. In this respect, opposite ends of both the film strip 30 and the audio tape 54 are secured in overlying relationship to both the supply and takeup spools in the cassette illustrated. While both webs are coupled to the spool, only one of the webs (i.e., the film strip) need be directly connected to the spool while the other web (i.e., the tape) may be connected to the first at a point close to the latter's spool connection.

In Figure 1 of the drawings, both the strip 30 and the tape 54 are illustrated in their relative conditions in an unused or rewound cassette in which both webs are on the supply spool 26. The path through which the audio tape 54, however, extends from the supply spool to the takeup spool 28 diverges from that taken by the film strip 30. In particular, the audio tape proceeds from the supply spool upwardly through a tape exit opening 56, past an audio station 58 defined in part by an opening in the top wall 22 of the cassette housing 10, to a cassette entry opening 60 where it re-enters the cassette and passes to its point of attachment with the takeup spool 28. The exit 56 and the entry 60 are established in part by a light shielding baffle 62 having low friction guiding surfaces 61 and 63 at opposite ends and spanning the opening 58 in the top wall 22 of the cassette.

The path of the audio tape 54 may alternately extend from the supply spool, past an audio station to a second takeup spool (not shown) separate from the film takeup spool 28. In such a cassette, only one end of the audio tape is connected to the supply spool, but the same interwinding of the audio tape and the film strip will occur during processing and/or rewinding of the film strip from the takeup spool 28 back to the supply spool 26.

Suitable audio components carried by either or both the photographic camera and the viewing device with which the cassette is to be used are illustrated in respective inactive and operative conditions in Figures 1 and 2 of the drawings. As schematically shown in these figures, the audio components include a drive capstan 64 and a backup idler roller 66 which, when closed on one another, operate to advance the audio tape 54 at uniform speed past a transducing head 68. A head backup pad 70 supported by a member 72 extending between a pair of head backup rollers 74 retain the audio tape in operative engagement with the transducer head as illustrated in Figure 2. An idler backup roller 76 engages one of the backup pad carrying rollers when the system is operative as illustrated in Figure 2. In its initial condition as shown in Figure 1, the audio tape 54 extends through loop portion 54a which is sufficiently stiff, at least over the initial portion thereof, to assume the bowed configuration in the opening 58 of the cassette housing so as to permit convenient insertion of appropriate audio components under the tape web 54. The loop 54a, as may be seen in Figure 2, allows the audio tape 54 to be passed continuously at a constant speed past the transducer head 68 in operation irrespective of whether it is paid out from the supply spool at a constant speed.

It has been recognized that the interwinding of the sound tape 54 with the film strip 30, particularly on the supply spool as an incident to film strip processing, gives rise to the problem of the sound tape sticking to the wet side of the film or, wet processing fluid applied to the film strip immediately in advance of its being rewound onto the supply spool 26. In accordance with the present invention, this problem as well as stripping of the negative emulsion, is effectively solved by interwinding with the audio and film webs, a third or separating web 80.

The separating and stripping web 80 is a flexible strip of, for example, plastic material such as Mylar (RTM), approximately equal in width to the film strip 30 and the tape web 54, and preferably inert and impervious to the processing fluid (designated as 30p in Figure 3). Advantageously like the film and tape, the separator web 80 need only be coupled to the spool and may be connected to one or both of the other strips near their spool end, rather than directly connected to the spool itself.

In the embodiment shown in both Figures 1 and 2 of the drawings, the separating web 80 extends directly from the supply spool 26 to the takeup spool 28 and is preferably guided along a separate path and maintained under tension with respect to both spools by a leaf spring 82 or other equivalent means secured to the front or back wall 14 or 16 of the cassette housing interior between the supply and takeup spools 26 and 28. In the illustrated embodiment, the tensioning spring 82 is in the nature of a flexible leaf·spring cantilevered from a mounting boss 84 and having an anti-friction guide 86 at its projecting end.

In Figure 3, the respective webs are shown greatly enlarged. By comparing Figure 3 and Figure 1, it will be seen that as the three webs are rewound onto the supply spool 26 during processing of the film strip 30, the layer of processing fluid 30p (Figure 3) will be presented in an outwardly facing direction as the strip 30 is initially wound on the supply spool 26. The separating web 80 will then overlie the·film emulsion surface which becomes wetted with the processing fluid. At the same time, the audio tape 54 will be interwound on the supply spool with one surface engaging the separating web 80 and the other surface (i.e., its oxide coating 55) contacting the base or always dry surface of the film strip 30. In this way, the audio tape 54 is never brought into direct contact with the emulsion or the wet processing fluid layer 30p. It should be noted that the thickness of the processing layer 30p is exaggerated in Figures 3—6 for clarity; however, in practice the layer is initially less than .00127 mm and is to a large extent, quickly absorbed into the emulsion surface of the film.

In the operation of the cassette incorporating the separating web 80 of the present invention, both the film strip and the audio tape may pass from the supply spool to the takeup spool in the manner aforementioned. The separating web 80, being under a slight tension, will pass in an essentially tangential path from the supply spool and strip away the negative emulsion layers from the film strip.

In Figure 4, the details of various functioning layers of photographic material of the film strip is depicted after it has been rewound past the processing station 40, but with the scale of various layers being exaggerated with respect to those illustrated in Figure 3. The film strip 30 is constituted by a base layer providing a transparent polyester carrier base 86 through which light is passed in the direction of the arrow 87 during film strip exposure. In the order of such exposure light transmission, the carrier base 86 is followed by a color screen layer 88 which in practice is constituted by a series of red, green, and blue lines. Superimposed successively on the color screen are a processing fluid barrier layer 90, a positive image receiving layer 92 depicted in Figure 2 with a positive silver image, a release coat 94, a negative or light sensitive emulsion layer 96, depicted in Figure 4 with a negative image of low covering power, and a cover layer 98 initially containing antihalation dyes and an image stabilizer. Principally to provide an understanding of the surface on which the processing fluid 30p is applied to the film strip 30, the processing fluid is also depicted as a layer although at this stage of the development, much of this layer has been imbibed into the film emulsion. Finally, the web 80 is illustrated in overlying relation to the inner layer 98 with the processing fluid interposed therebetween.

The release coat 94 may be an alkali-degradable wax or other coating, which is at least partially dissolved or degraded by the alkaline processing liquid 30p such that after processing, the release coat 94 reduces the adhesion between the positive image layer 92 and the negative image layer 96 so that such adhesion is less than the adhesion of the web 80 to the wetted emulsion, that is, to the cover layer 98. In this regard, the adhesion between the web 80 and the wet processed film is facilitated by the imbibition period during which the wet film and web are retained in a wound condition on the supply spool, just following the processing rewind, for a short time period of approximately 10 to 30 seconds to aid image development.

As mentioned previously, the development of the positive silver image in the layer 92 is as a result of the processing fluid diffusion through the cover layer 98 to the emulsion layer 96 where exposed grains of silver halide contained therein are developed and unexposed grains are dissolved and caused to migrate by diffusion transfer to the positive image receiving layer 92 where they are transformed into a variably opaque silver positive image. The layers 96 and 98, after processing, are essentially transparent but result in a measure of light attenuation when the film strip is projected by light passing in a direction in the reverse of the arrow 87.

Because of the manner in which the web 80 is interwound with the film strip 30, it will be observed by reference to Figures 1 and 2 of the drawings, that as the film strip 30 is wound (from left to right) on the supply spool 26 during rewind with its deposition of the processing fluid 30p thereon, the web 80 will travel also from the takeup spool 26 to the supply spool and overlie the cover layer 98 as well as the residual processing fluid 30p on the cover layer at this time.

Then, as the left-to-right direction of web travel is again reversed to right-to-left travel, such as during a mandatory projection cycle, the film strip 30 will pay off from the supply spool 26 through the film path to the takeup spool 28. The stripping web 80, however, in passing along its own path to the takeup spool 28, will diverge from or part from the film strip 30 and carry with it the spent inner layer 98 and emulsion layer 96 as shown in Figure 5. This parting of such layers from the remaining layers of the film strip will result in part from the action of the release coat 94.

In Figures 5 and 6 of the drawings, the layers of photographic material separately carried by the stripping web 80 and the carrier base 86 of the film strip 30 are illustrated. Thus, in Figure 5, the layers of material disposed inwardly of the release coat 94, specifically the spent emulsion layer 96 as well as the used cover layer 98, are attached by adhesion to the stripping web 80. Likewise as shown in Figure 6, layers necessary to the viewing of a positive color image, such as the color screen 88 and the positive image receiving layer 92 remain with the carrier base 86 of the film strip. The separation of the layers 96 and 98 from the film strip 30 occurs naturally as a result of the tacky characteristics of the inner surface of the film, at least after the processing fluid 30p has been deposited on the film strip. This separation is, of course, augmented by the provision in the film strip of the release coat 94 between the image layers 92 and 96.

As a result of the separation or stripping of the layers 96 and 98 from the film strip 30, the latter only retains the base 86, the screen 88, the fluid barrier 90, and the positive layer 92, as noted in Figure 6. Consequently, during the projection cycle following the processing operation, projection light passing in the direction of the arrow 82 will now pass only through the components of the film strip which are necessary to recreate the developed positive image formed in the layer 92. As a result, attenuation of light by the spent cover and emulsion layers is avoided. During the first projection cycle, as the web 80 is rewound with the film strip 30 on the takeup spool, any tendency for the layers 96 and 98 carried by this web to readhere to the film strip is reduced by virtue of the continued drying of the components. During subsequent rewind and projection cycles, the web 80 will merely be wound and rewound with the now developed film strip and the sound tape 54 without interference with projection and rewind operations.

As a result of this invention, a highly effective and readily adapted stripping apparatus is provided by which the aforementioned objectives are completely fulfilled.

## Claims

1. A photographic film cassette (10) having a film strip (30) coupled at opposite ends to a cassette-contained supply and takeup spools (26, 28) upon which the film strip (30) may be alternately wound and unwound for movement between the spools in a first path through a photographic station, the film strip (30) including an emulsion surface, the cassette (10) including a processing station (38) operative after film exposure and during rewinding on to a given one of the spools (26) to deposit a thin layer (30p) of processing fluid on one surface of the film strip, the film strip having a carrier base (86) to support below the said surface a plurality of layers including a light sensitive emulsion acted upon by the processing fluid and a positive image-forming layer located between the carrier base and the light sensitive emulsion, the cassette (10) further including an audio tape (54) coupled at one end to the said spool (26) for interwinding thereon with the film strip (30) and extending along a second path through an audio station, the cassette further comprising:

a stripping and separating web (80) of thin flexible material having one end coupled to the said spool (26) for winding thereon in an interleaved manner between the audio tape (54) and the said surface of the film strip (30) the stripping and separating web (80) being movable from the said spool (26) in a third path separate from the first and second paths so that when, following the depositing of the processing fluid, the film strip (30) is rewound on the said spool (26), the stripping web (80) lies between the said surface of the film strip (30), now wetted with processing fluid, and the audio tape, and upon subsequent unwinding of both the film strip (30) and said stripping web (80) and corresponding travel in their separate paths, diverging separation of said stripping web (80) from the film strip (30) causes at least a portion of the light sensitive emulsion to be retained by adhesion on said stripping web (80).

2. A cassette according to claim 1 wherein the end of said stripping and separating web (80) opposite from the said end is coupled to the other of said spools.

3. A cassette according to claim 1 or 2 including means for tensioning said separating web (80) with respect to at least the said spool (26) to facilitate separation of said stripping and separating web (80) from said film strip (30) during unwinding thereof.

4. A cassette according to claim 1 wherein the said spool is said supply spool (26) and said cassette (10) further includes means for tensioning said stripping and separating web (80) with respect to said supply spool (26), and wherein the other end of said stripping and separating web (80) is coupled to the takeup spool (28) and said tensioning means includes yieldable guide means positioned between the supply and takeup spools (26, 28) to tension said separating web (80) with respect thereto.

## Patentansprüche

1. Fotografische Filmkassette (10) mit einem Filmstreifen (30), der mit seinen beiden entgegengesetzten Enden an einer kassetteneigenen Vorratsspule bzw. Aufwickelspule (26, 28) befestigt ist, auf die der Filmstreifen (30) abwechselnd auf bzw. abgewickelt werden kann, um sich zwischen den Spulen auf einem ersten Pfad durch eine fotografische Station hindurchzubewegen, wobei der Filmstreifen (30) eine Emulsionsoberfläche aufweist und die Kassette (10) eine Behandlungsstation (38) besitzt, die nach der Belichtung des Films und während dessen Rückspulung auf eine der Spulen (26) wirksam wird, um eine dünne Schicht (30p) von Behandlungsflüssigkeit auf einer Oberfläche des Filmstreifens aufzutragen und wobei der Filmstreifen eine Trägerbasis (86) aufweist, um unter der Emulsionsschicht mehrere Schichten einschließlich einer lichtempfindlichen Emulsion zu tragen, auf die die Behandlungsflüssigkeit einwirkt und wobei eine weitere, ein positives Bild bildende Schicht zwischen der Trägerbasis und der lichtempfindlichen Emulsion angeordnet ist und wobei die Kassette (10) außerdem ein Tonband (54) aufweist, das an einem Ende an der Spule (26) festgelegt ist und zwischen den Filmstreifen (30) eingespult ist und sich über einen zweiten Pfad durch eine Audiostation erstreckt, und wobei die Kassette weiter aufweist:

ein Abstreif- und Trennband (80) aus dünnem flexiblem Material, das mit einem Ende an der Spule (26) festgelegt ist, um es auf dieser Spule zwischen dem Tonband (54) und der Emulsionsoberfläche des Filmstreifens (30) einzuspulen, wobei das Abstreif- und Trennband (80) von der Spule (26) auf einem dritten Pfad beweglich ist, der vom ersten und zweiten Pfad getrennt ist, so daß dann wenn nach der Ablagerung der Behandlungsflüssigkeit der Filmstreifen (30) auf die Spule (26) zurückgespult wird, das Abstreifband (80) zwischen der besagten Oberfläche des Filmstreifens (30), die nunmehr mit der Behandlungsflüssigkeit benetzt ist, und dem Tonband zu liegen kommt, während nach der darauffolgenden Abspulung von Filmstreifen (30) und Abstreifband (80) und der entsprechenden Bewegung auf ihren getrennten Pfaden durch die divergierende Bewegung eine Trennung von Abstreifband (80) von Filmstreifen (30) bewirkt wird, wodurch wenigstens ein Teil der lichtempfindlichen Emulsion durch Adhäsion auf dem Abstreifband (80) abgelagert wird.

2. Kassette nach Anspruch 1, bei welcher das Ende des Abstreif- und Trennbandes (80), welches dem besagten Ende gegenüberliegt, mit der anderen Spule gekuppelt ist.

3. Kassette nach den Ansprüchen 1 oder 2, mit Mitteln zur Spannung des Trennbandes (80) gegenüber wenigstens einer Spule (26), um eine Trennung des Abstreif und Trennbandes (80) von dem Filmstreifen (30) während der Abspulung zu bewirken.

4. Kassette nach Anspruch 1, bei welcher die besagte Spule die Vorratsspule (26) ist und die Kassette (10) außerdem Mittel aufweist, um das Abstreif- und Trennband (80) gegenüber der Vorratsspule (26) zu spannen, wobei das andere Ende des Abstreif- und Trennbandes (80) mit der Aufwickelspule (28) gekuppelt ist und die Spannvorrichtung elastisch nachgiebige Führungsmittel aufweist, die zwischen der Vorratsspule und der Aufwickelspule (26, 28) angeordnet sind, um das Trennband (80) gegenüber diesen Spulen zu spannen.


**Revendications**

1. Cassette (10) de film photographique comportant un film (30) relié à ses extrémités opposées à une bobine débitrice et à une bobine réceptrice (26, 28) contenues dans la cassette et sur lesquelles le film (30) peut être alternativement enroulé et déroulé de manière à se déplacer entre les bobines en suivant un premier trajet passant par un dispositif photographique, le film (30) comprenant une surface sensible, la cassette (10) comprenant un dispositif (38) de traitement fonctionnant après l'exposition du film et pendant le réenroule- ment sur une des bobines (26) afin de déposer une couche mince (30p) de fluide de traitement sur une surface du film, ce dernier comportant un support (86) en dessous de cette surface pour supporter plusieurs couches comprenant une émulsion photosensible sur laquelle agit le fluide de traitement, et une couche de formation de l'image sensible disposée entre le support et l'émulsion photosensible, la cassette (10) comportant en plus une bande son (54) reliée à une extrémité à la bobine (26) pour s'enrouler sur cette dernière en même temps que le film (30) tout en suivant un deuxième trajet passant par un dispositif audio, cette cassette étant caractérisée en ce qu'elle comprend en outre une bande (80) de pelliculage en matériau flexible mince dont une première extrémité est reliée à la bobine (26) pour s'enrouler sur celle-ci de manière à s'intercaler entre la bande son (54) et la surface du film (30), cette bande (80) de pelliculage pouvant se déplacer depuis la bobine (26) en suivant un troisième trajet distinct des premier et deuxième trajets de sorte que, lorsque le film (30) est réenroulé sur la bobine (26) après le dépôt du fluide de traitement, la bande (80) de pelliculage se trouve intercalée entre la surface du film (30) mouillée alors par le fluide de traitement, et la bande son, et de sorte que, lors du déroulement ultérieur du film (30) et de la bande (80) de pelliculage et leur déplacement correspondant suivant leurs trajets distincts, la séparation par écartement de la bande (80) de pelliculage et du film (30) a pour résultat qu'une partie au moins de l'émulsion photosensible reste fixée par adhérence sur cette bande (80) de pelliculage.

2. Cassette suivant la revendication 1, caractérisée en ce que l'extrémité de la bande (80) de pelliculage opposée à la première extrémité est reliée à l'autre bobine.

3. Cassette suivant l'une des revendications 1 ou 2, caractérisée en ce qu'elle comprend un moyen de tension de la bande (80) de pelliculage par rapport à la bobine (26) au moins afin de faciliter la séparation de cette bande (80) de pelliculage et du film (30) pendant leur déroulement.

4. Cassette suivant la revendication 1, caractérisée en ce que, la bobine étant une bobine débitrice (26), la cassette (10) comprend en outre un moyen pour tendre la bande (80) de pelliculage par rapport à cette bobine débitrice (26); et en ce que, l'autre extrémité de la bande (80) de pelliculage étant reliée à la bobine réceptrice (28), le moyen de tension comprend un moyen élastique de guidage placé entre la bobine débitrice (26) et la bobine réceptrice (28) afin de tendre la bande (80) de pelliculage par rapport à ces dernières.

FIG. I.

FIG. 2.

0 020 491

1

FIG. 3

FIG. 4

FIG. 5

FIG. 6